# DEMANDE DE BREVET EUROPEEN

(11) **EP 1 248 114 A1**
(43) Date de publication de la demande: **09.10.2002**
(21) Numéro de dépôt: 02290800.8
(22) Date de dépôt: 29.03.2002
(51) Int. Cl.: G01P 3/44

(54) **Roulement pourvu d'une gaine d'assemblage d'un capteur**

(30) Priorité: 06.04.2001 FR 0104735
(71) Demandeur: SNR ROULEMENTS, 74010 Annecy Cédex (FR)
(72) Inventeur: Beauprez, Jean-Michel, 74270 Menthonnex sous Clermont (FR)
(74) Mandataire: Geismar, Thierry

(57) **Abrégé**

Roulement (1) équipé d'un dispositif capteur d'informations, comprenant une bague intérieure tournante (3), une bague extérieure fixe (2) et des corps roulants (4) disposés entre elles, dans lequel ledit dispositif capteur d'informations comprend un codeur (10) et un capteur (11), ledit roulement (1) comprenant une gaine d'assemblage (22) du capteur (11) avec la bague fixe (2), ladite gaine(22) comprenant une portée cylindrique (23) s'étendant sur toute la longueur axiale des faces transversales extérieures du capteur (11) et de la bague extérieure (2), et des moyens de retenue axiale (26, 27) disposés de part et d'autre de ladite portée (23), lesdits moyens (26, 27) étant en appui sur au moins une partie des faces latérales (28, 29) respectivement avant et arrière du capteur (11) et de la bague extérieure (2).

## Description

De tels roulements, lorsqu'ils sont équipés d'un dispositif capteur de vitesse de rotation, de positon angulaire et/ou de sens de rotation de la bague tournante par rapport à la bague fixe, peuvent notamment être employés dans des colonnes de direction d'un véhicule automobile. En particulier, les informations peuvent être converties en signaux fonction du couple exercé sur la colonne par l'intermédiaire du volant, lesdits signaux étant utilisés par un calculateur d'assistance de direction.

Dans un autre exemple d'application, de tels roulements sont utilisés pour les roues de véhicules automobiles qui sont pourvues de système anti-blocage desdites roues, et les informations sont alors notamment utilisées par un calculateur d'assistance au freinage.

On connaît déjà des roulements équipés d'un dispositif capteur d'informations qui comprend un codeur générateur d'impulsions magnétiques associé à la bague tournante et, associé à la bague fixe, un capteur muni d'au moins deux éléments sensibles aptes à détecter ces impulsions.

Un des problèmes qui se pose avec de tels roulements est l'association du capteur sur le roulement.

En effet, le capteur doit être solidarisé au roulement de façon précise afin que les éléments sensibles soient en regard et à distance d'entrefer du codeur.

En outre, et notamment pour des utilisations de sécurité telles que l'anti-blocage des roues ou l'assistance à la direction, cette solidarisation doit être suffisamment sûre pour ne pas risquer un démontage intempestif du capteur.

Pour résoudre ce problème, il est connu de clipser ou d'emmancher le capteur sur une face transversale de la bague extérieure.

Mais cette solution présente notamment l'inconvénient d'être spécifique à chaque dimension de roulement en nécessitant soit un capteur particulier pour chaque dimension de roulement soit des roulements pourvus de moyens d'association spécifiques pour un type de capteur donné.

Pour des raisons de standardisation des roulements et des capteurs, ce type de solution n'est donc pas optimal notamment pour des applications dans l'industrie automobile.

L'invention vise donc notamment à remédier à cet inconvénient en proposant un roulement dans lequel un capteur peut être associé, de façon précise et sûre, à des roulements de tailles différentes par l'intermédiaire d'un moyen qui ne nécessite par de modification spécifique dudit roulement.

A cet effet, l'invention propose un roulement équipé d'un dispositif capteur d'informations, comprenant une bague intérieure tournante, une bague extérieure fixe et des corps roulants disposés entre elles, dans lequel ledit dispositif capteur d'informations comprend un codeur générateur d'impulsions magnétiques associé à la bague tournante et, associé à la bague fixe, un capteur muni d'au moins deux éléments sensibles aptes à détecter ces impulsions, ledit roulement comprenant une gaine d'assemblage du capteur avec la bague fixe, ladite gaine comprenant une portée cylindrique s'étendant sur toute la longueur axiale des faces transversales extérieures du capteur et de la bague extérieure, et des moyens de retenue axiale disposés de part et d'autre de ladite portée, lesdits moyens étant en appui sur au moins une partie des faces latérales respectivement avant et arrière du capteur et de la bague extérieure.

D'autres objets et avantages de l'invention apparaîtront au cours de la description qui suit, faite en référence aux dessins annexés, dans lesquels :
- la figure 1 représente, en coupe longitudinale, un premier mode de réalisation d'un roulement selon l'invention ;
- la figure 2 représente, en coupe longitudinale, un deuxième mode de réalisation d'un roulement selon l'invention ;
- La figure 3 représente une vue avant du roulement représenté sur la figure 2 ;
- la figure 4 représente, en coupe longitudinale, un troisième mode de réalisation d'un roulement selon l'invention ;
- La figure 5 représente une vue avant du roulement représenté sur la figure 4.

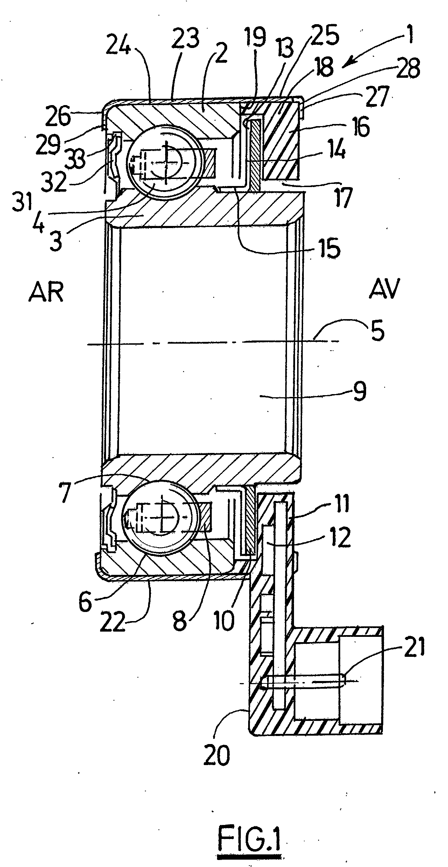

Sur les figures 1 à 5 est représenté un roulement 1 prêt à l'emploi comprenant une bague extérieure fixe 2, une bague intérieure tournante 3 et des corps roulants 4 disposés entre elles afin de permettre la rotation relative de ces deux bagues 2, 3 autour d'un axe 5.

Dans la description, les termes « extérieur » et « intérieur » sont définis par rapport à un plan respectivement opposé et en regard de l'axe 5, les termes « axial » ou « transversal » sont définis par rapport à un plan parallèle à l'axe 5, les termes « radial » ou « latéral » sont définis par rapport à un plan perpendiculaire à l'axe 5, les termes « avant » et « arrière » sont définis par rapport aux indices av et ar placés sur les figures, les dimensions mesurées selon l'axe 5 ou perpendiculairement à lui sont dites respectivement « axiales » et « radiales ».

Dans les modes de réalisation représentés, un chemin de roulement 6, 7 est réalisé respectivement sur la face intérieure de la bague fixe 2 et sur la face extérieure de la bague tournante 3, et le roulement est assuré par une rangée de billes 4 qui sont maintenues à équidistance par des cages 8.

De tels roulements 1 sont par exemple utilisés pour assurer la rotation d'une colonne de direction ou celle des roues d'un véhicule automobile. A cet effet, la bague intérieure 3 présente un alésage 9 destiné à loger la colonne de direction ou le moyeu de la roue.

Lorsque l'on veut connaître la vitesse de rotation, le sens de déplacement et/ou la position angulaire de la bague tournante 3 par rapport à bague fixe 2, il est connu d'utiliser un dispositif capteur d'informations comprenant un codeur 10 générateur d'impulsions magnétiques associé à la bague tournante 3 et, associé à la bague fixe 2, un capteur 11 muni d'au moins deux éléments sensibles 12 aptes à détecter ces impulsions.

Ce type d'informations, après traitement électronique tel que par exemple celui décrit dans le document FR-2 792 380, est classiquement utilisé dans des systèmes d'aide à la conduite tels que l'assistance de direction ou des systèmes d'anti-blocage des roues.

Dans un exemple particulier, le codeur 10 est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.

Dans les modes de réalisation représentés, le codeur 10 est surmoulé sur une portée cylindrique annulaire et radiale 13 d'une armature 14. L'armature 14 comprend également une portée cylindrique annulaire et axiale 15 qui est associée, par exemple par emmanchement, sur la face extérieure de la bague intérieure 3. Cette réalisation permet la mise en rotation conjointe du codeur 10 et de la bague intérieure 3.

Dans un exemple particulier, le capteur 11 comprend au moins deux éléments sensibles 12, par exemple une pluralité d'éléments sensibles alignés 12, qui sont choisis parmi les sondes à effet Hall, les magnétorésistances, les magnétorésistances géantes. De façon connue, de tels éléments 12 sont aptes à détecter les impulsions magnétiques générées par le codeur 10 de sorte à fournir des signaux par exemple représentatifs de la vitesse de rotation, du sens de déplacement et/ou de la position angulaire de la bague tournante 3 par rapport à bague fixe 2.

Dans les modes de réalisation représentés sur les figures, le capteur 11 est formée d'un anneau 16 concentrique au roulement 1 et un alésage 17 est formé dans l'anneau 16 pour qu'il n'interfère pas avec la rotation de la bague tournante 3.

L'anneau 16 comprend une extension périphérique 18 s'étendant axialement vers l'arrière et dont la longueur est agencée pour, en venant en appui sur la face latérale avant 19 de la bague fixe 2, permettre le positionnement des éléments sensibles 12 en regard et à distance d'entrefer du codeur 10.

A cet effet, la face latérale avant 19 de la bague fixe 2 ne comporte aucun usinage spécifique pour permettre le maintien ou la mise en position du capteur 11 avec les éléments sensibles 12 à distance d'entrefer du codeur 10.

En outre, le capteur 11 comprend un logement radial 20 agencé pour recevoir la connectique d'entrée/sortie 21 du capteur 11, par exemple formée d'un connecteur ou d'un câble multifilaire.

Dans un exemple particulier, le capteur 11 est réalisé de façon monobloc, par exemple par moulage d'un matériau plastique, avec les éléments sensibles 12 disposés dans la masse de l'anneau 16.

L'association du capteur 11 sur la bague extérieure 2 est réalisée au moyen d'une gaine d'assemblage 22. Par exemple, la gaine 22 est réalisée en matériau métallique par usinage dans la masse ou à partir d'un tube.

La gaine 22 comprend une portée cylindrique 23 s'étendant sur toute la longueur axiale des faces transversales extérieures de la bague fixe 2 et du capteur 11.

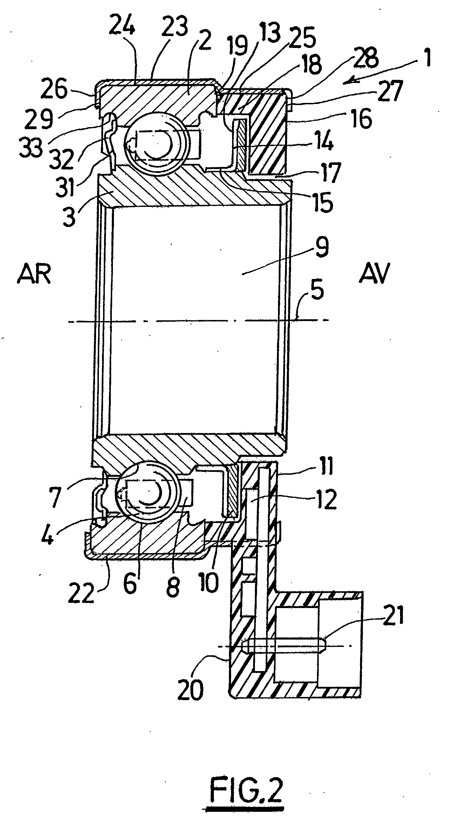

En relation avec les figures 1 et 2, on décrit l'utilisation d'un même dispositif capteur d'informations pour deux roulements 1 différents, à savoir un roulement 1 (figure 2) dont le diamètre extérieur de la bague extérieure 2 est supérieur à l'autre (figure 1).

Le diamètre de la gaine 22 est choisi pour être sensiblement égal au diamètre extérieur de la bague extérieure 2 de sorte, après l'emmanchement du roulement 1 à l'intérieur de la gaine 22, à assurer son blocage radial.

Dans le premier mode de réalisation représenté sur la figure 1, où le diamètre extérieur de l'anneau 16 est sensiblement égal à celui de la bague extérieure 2, le capteur 11 est ensuite disposé à l'intérieur de la gaine 22 de sorte à assurer également un blocage radial du capteur 11.

Dans le deuxième mode de réalisation représenté sur la figure 2, où le diamètre extérieur de l'anneau 16 est inférieur à celui de la bague extérieure 2, la gaine 22 comprend, outre une première partie 24 de réception de la bague extérieure 2, une deuxième partie 25 de réception du capteur 11 dont le diamètre est sensiblement égal au diamètre extérieur de l'anneau 16.

Ainsi, lorsque le capteur 11 est disposé à l'intérieur de la gaine 22 son blocage radial est également assuré.

La conformation de la deuxième partie 25 de la gaine 22 peut être réalisée, par exemple par déformation à froid, soit avant soit après la disposition du capteur 11 à l'intérieur de la gaine 22.

On voit donc que, pour deux roulements 1 de tailles différentes, un même dispositif capteur d'informations peut être utilisé de façon simple et sans modification spécifique du roulement 1 puisque qu'aucun usinage du roulement 1 n'est nécessaire. En outre le blocage radial du roulement 1 et du capteur 11 est assuré de façon simple et sûre.

En effet, notamment du fait que la portée 23 s'étend sur toute la longueur axiale des faces transversales extérieures de la bague fixe 2 et du capteur 11, il n'est pas possible que la bague extérieure 2 ou que le capteur 11 sorte radialement de la gaine 22.

De plus, un léger serrage peut être prévu au niveau de la surface extérieure de la portée 23 afin d'améliorer l'immobilisation en rotation de la bague extérieure 2 et du capteur 11.

La gaine 22 comprend en outre des moyens de retenue axiale 26, 27 qui sont disposés de part et d'autre de la portée 23, lesdits moyens 26, 27 étant en appui sur une partie des faces latérales 28, 29 respectivement avant et arrière de l'anneau 28 et de la bague extérieure 29.

Cette réalisation permet d'assurer un positionnement précis des éléments sensibles 12 à distance d'entrefer du codeur 10 en empêchant tout mouvement relatif du capteur 11 par rapport à la bague extérieure 2 et donc par rapport au codeur 10.

En outre, les deux moyens de retenue axiale 26, 27 étant disposés de part et d'autre de la portée 23 afin de former butée mécanique, l'association du capteur 11 sur la bague extérieure 2 est réalisée de façon très sûre.

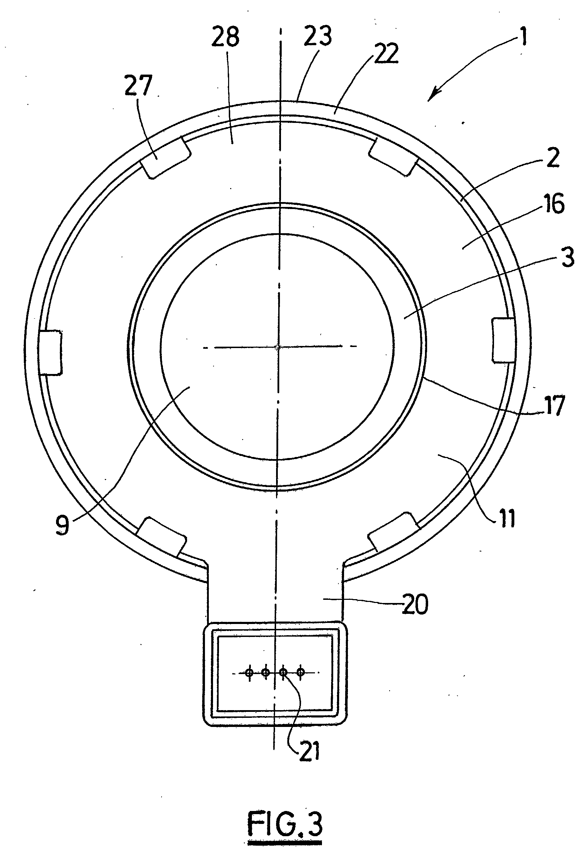

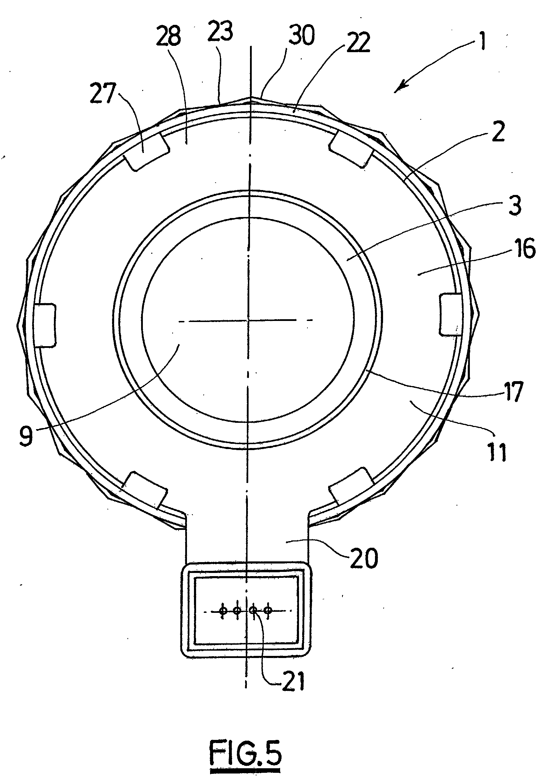

Dans les modes de réalisation représentés, les moyens de retenue arrière, c'est-à-dire ceux en contact avec la bague extérieure 2, sont formés par un épaulement radial 26 et les moyens de retenue avant sont formés d'une pluralité de griffes 27 rabattues radialement sur la face avant 28 de l'anneau 16, lesdites griffes 27 étant reparties sur la périphérie de la gaine 22 (voir figures 3 et 5).

Ainsi, préalablement ou postérieurement à l'emmanchement du roulement 1 à l'intérieur de la gaine 22, l'épaulement 26 est formé par exemple par déformation plastique ou par usinage d'une extrémité de la gaine 22, puis, après disposition du roulement 1 et du capteur 11 à l'intérieur de la gaine 22, les griffes 27 sont rabattues de sorte à assurer le blocage axial du capteur 11 par rapport à la bague extérieure 2.

Toutefois, d'autres réalisations sont envisageables, par exemple avec des moyens de retenue avant et arrière identiques.

En outre, le roulement 1 peut être destiné à être emmanché dans un logement par l'intermédiaire de la face extérieure de la bague fixe 2. En particulier, et lorsqu'il est utilisé dans une colonne de direction, le logement est prévu dans le tube de direction qui loge la colonne.

Du fait que la portée 23 s'étende sur toute la longueur axiale de la face transversale extérieure de la bague fixe 2, la longueur de la portée d'emmanchement du roulement 1 dans le logement n'est pas diminuée par l'utilisation de la gaine d'assemblage 22. En effet, dans ce cas c'est la première partie 24 de la gaine 22 qui sert de portée d'emmanchement.

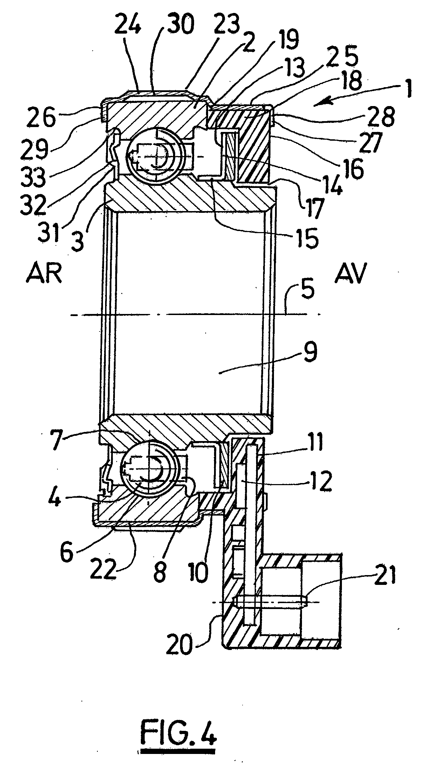

Le troisième mode de réalisation représenté sur les figures 4 et 5, prévoit que la première partie 24 de la gaine 22 comprenne une pluralité de zones 30 saillant radialement.

En particulier, les zones 30, par exemple réalisées par déformation plastique, sont réparties sur la circonférence de la première partie 24 et ont pour fonction d'assurer un meilleur effort de serrage du roulement 1 à l'intérieur du logement. Le nombre et la forme de ces zones 30 sont définis en fonction de l'effort de serrage à assurer.

Ainsi, la présence des zones 30 permet d'obtenir un blocage plus ferme du roulement 1 à l'intérieur du logement en empêchant toute rotation intempestive.

Dans les modes de réalisation représentés sur les figures, l'étanchéité du roulement 1 est assurée, sur la face arrière, par une lèvre 31 en élastomère qui frotte sur la bague intérieure 3. Pour ce faire, la lèvre 31 est surmoulée sur une armature 32 associée, par exemple par clipsage, dans une rainure 33 prévue sur la face intérieure de la bague extérieure 2.

L'étanchéité sur la face avant est réalisée grâce à la disposition relative de l'armature 14 et de l'anneau 16. En effet, ceux-ci forment une chicane qui permet d'éviter la pollution du roulement 1 et les fuites de lubrifiant. En particulier, le capteur 11 permet de protéger le codeur 10 en lui faisant face sur l'ensemble de sa périphérie afin de limiter la progression des polluants.

Toutefois, on peut prévoir d'autres moyens d'étanchéité, par exemple que les cages 8 comprennent des extensions axiales frottant sur les bagues 2, 3 afin de servir de déflecteurs ou, notamment pour des roulements pour mouvements alternatifs, d'utiliser un lubrifiant solide tel que décrit dans le document FR-2 760 055.

En outre, et pour améliorer l'étanchéité côté avant, une lèvre d'étanchéité telle que décrite ci-dessus peut être utilisée pour venir frotter sur la portée 15 de l'armature 14.

## Revendications

1. Roulement (1) équipé d'un dispositif capteur d'informations, comprenant une bague intérieure tournante (3), une bague extérieure fixe (2) et des corps roulants (4) disposés entre elles, dans lequel ledit dispositif capteur d'informations comprend un codeur (10) générateur d'impulsions magnétiques associé à la bague tournante (3) et, associé à la bague fixe (2), un capteur (11) muni d'au moins deux éléments sensibles (12) aptes à détecter ces impulsions, ledit roulement (1) étant **caractérisé en ce qu'**il comprend une gaine d'assemblage (22) du capteur (11) avec la bague fixe (2), ladite gaine(22) comprenant une portée cylindrique (23) s'étendant sur toute la longueur axiale des faces transversales extérieures du capteur (11) et de la bague extérieure (2), et des moyens de retenue axiale (26, 27) disposés de part et d'autre de ladite portée (23), lesdits moyens (26, 27) étant en appui sur au moins une partie des faces latérales (28, 29) respectivement avant et arrière du capteur (11) et de la bague extérieure (2).

2. Roulement selon la revendication 1, **caractérisé en ce que** la portée cylindrique (23) présente une première partie (24) de réception de la bague extérieure (2) et une deuxième partie (25) de réception du capteur (11), le diamètre de la première partie (24) étant supérieur ou égal à celui de la deuxième partie (25).

3. Roulement selon la revendication 1 ou 2, **caractérisé en ce que** les moyens de retenue comprennent un épaulement radial (26) formé sur au moins une extrémité de la portée (23).

4. Roulement selon l'une quelconque des revendications 1 à 3, **caractérisé en ce que** les moyens de retenue comprennent une pluralité de griffes (27) rabattues radialement, lesdites griffes (27) étant prévues sur au moins une extrémité de la portée (23).

5. Roulement selon l'une quelconque des revendications 2 à 4, **caractérisé en ce que** la première partie (24) de la gaine (22) comprend au moins une zone (30) saillant radialement de la gaine (22).

6. Roulement selon l'une quelconque des revendications 1 à 5, **caractérisé en ce que** la gaine (22) est métallique.

7. Roulement selon l'une quelconque des revendications 1 à 6, **caractérisé en ce que** le capteur (11) est réalisé de façon monobloc avec les éléments sensibles (12) disposés en regard et à distance d'entrefer du codeur (10), et la connectique d'entrée/sortie (21) du capteur (11) disposés dans un logement radial (20).

8. Roulement selon l'une quelconque des revendications 1 à 7, **caractérisé en ce que** les éléments sensibles (12) sont choisis parmi les sondes à effet Hall, les magnétorésistances, les magnétorésistances géantes.

9. Roulement selon l'une quelconque des revendications 1 à 8, **caractérisé en ce que** le codeur (10) est formé d'un anneau multipolaire en matériau synthétique chargé de particules de ferrite formé d'une pluralité de domaines contigus à direction d'aimantation inversée d'un domaine donné par rapport aux deux domaines qui lui sont contigus.
